# EUROPEAN PATENT APPLICATION

(11) **EP 4 316 976 A1**
(43) Date of publication of application: **07.02.2024**
(21) Application number: 22780515.7
(22) Date of filing: 24.03.2022
(51) Int. Cl.: B63J 2/02, F24F 7/06

(54) **SHIP**

(30) Priority: 31.03.2021 JP 2021060293
(71) Applicant: Mitsubishi Shipbuilding Co., Ltd., Yokohama-shi Kanagawa 220-8401 (JP)
(72) Inventor: YAMADA Daisuke, Yokohama-shi, Kanagawa 220-8401 (JP); UNSEKI Takashi, Yokohama-shi, Kanagawa 220-8401 (JP)
(74) Representative: Studio Torta S.p.A.
(86) International application number: PCT/JP2022/014151
(87) International publication number: WO 2022/210301

(57) **Abstract**

This ship comprises: a hull having a compartment in which ammonia-related equipment is accommodated; a duct having a first opening and a second opening each communicating with the compartment; a circulation fan which blows air from the first opening of the duct toward the second opening; and an ammonia removal unit which is provided midway in the duct and can remove ammonia contained in the air inside the compartment blown by the circulation fan.

## Description

### Technical Field

The present disclosure relates to a ship.

Priority is claimed on Japanese Patent Application No. 2021-060293 filed on March 31, 2021, the content of which is incorporated herein by reference.

### Background Art

There is a growing international momentum for decarbonized fuels, and the introduction of an ammonia cofiring boiler at a coal-fired power plant is being considered. The use of ammonia as a fuel for a main engine is also being considered for ships. In a case where ammonia as a fuel for a power plant is transported or in a case where ammonia is used as a fuel for a main engine, there is a possibility of leakage of ammonia in a compartment such as an equipment room that accommodates equipment that handles ammonia.

PTL 1 discloses a technique in which, in a compartment in which equipment that uses ammonia as a refrigerant is accommodated, in a case where ammonia leaks from the equipment due to an accidental event, ammonia vaporized in the compartment is prevented from leaking out of the compartment.

In PTL 1, in a case where water is sprinkled into the compartment, the equipment is flooded. Therefore, a sealed duct that communicates with the compartment is provided, and water is sprinkled into the duct. Accordingly, ammonia in the duct is absorbed by the water, and a negative pressure is created in the compartment, so that leakage of ammonia out of the compartment is prevented.

### Citation List

### Patent Literature

[PTL 1] Japanese Patent No. 4356939

### Summary of Invention

### Technical Problem

However, in PTL 1, although the leakage of ammonia out of the compartment is prevented, the ammonia remains in the compartment, so that there is a possibility that a worker comes into contact with the ammonia.

The present disclosure has been made to solve the above problems, and an object thereof is to provide a ship capable of suppressing contact between a worker and ammonia inside and outside a compartment without flooding equipment in the compartment.

### Solution to Problem

In order to solve the above problems, a ship according to the present disclosure includes: a compartment in which ammonia-related equipment is accommodated; a duct having a first opening and a second opening each communicating with the compartment; a circulation fan that blows air from the first opening of the duct toward the second opening; and an ammonia removal unit that is provided midway in the duct and is capable of removing ammonia contained in the air inside the compartment that is blown by the circulation fan. Advantageous Effects of Invention

According to the present disclosure, it is possible to provide a ship capable of suppressing contact between a worker and ammonia inside and outside a compartment without flooding equipment in the compartment.

### Brief Description of Drawings

Fig. 1 is a side view of a ship according to an embodiment of the present disclosure.
Fig. 2 is a view showing a configuration related to removal of ammonia in a compartment of a ship according to a first embodiment of the present disclosure.
Fig. 3 is a view showing a configuration related to removal of ammonia in a compartment of a ship according to a second embodiment of the present disclosure.
Fig. 4 is a view showing a state when open and closed states of various dampers are changed in the configuration related to removal of ammonia in the compartment of the ship according to the second embodiment of the present disclosure. Description of Embodiments

### [First Embodiment]

### (Ship)

Hereinafter, a ship according to an embodiment of the present disclosure will be described with reference to the drawings.

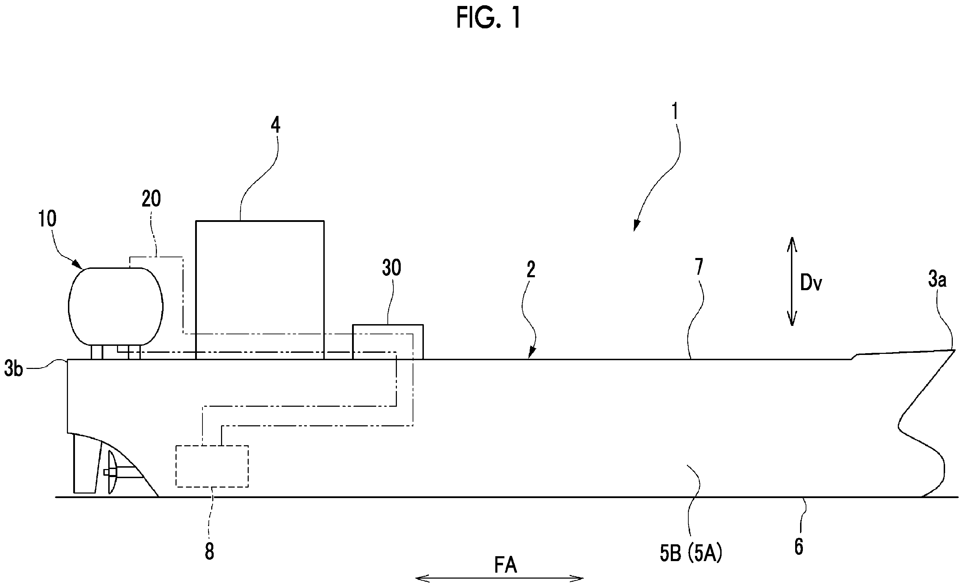

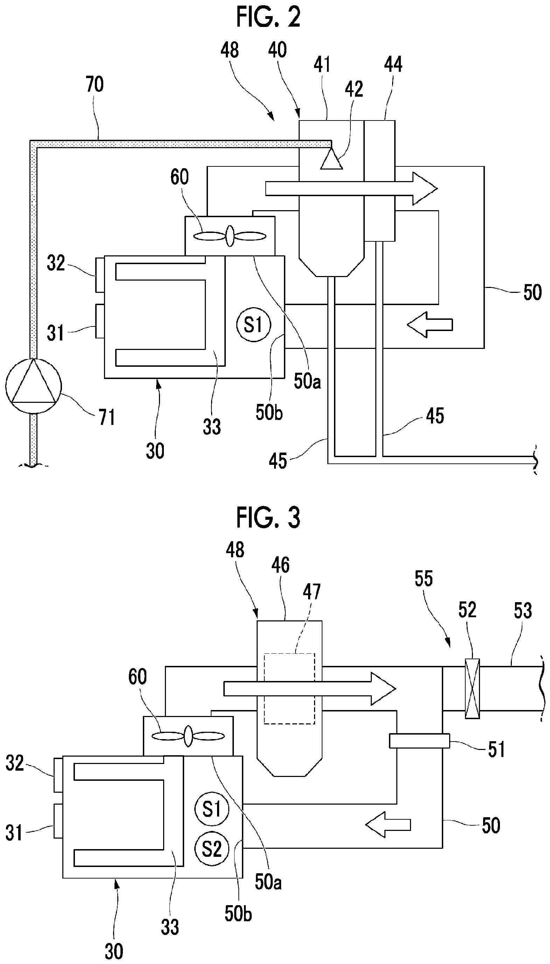

As shown in Figs. 1 and 2, the ship of the present embodiment is a ship 1 that holds ammonia as cargo or as a fuel, and includes a hull 2, a superstructure 4, a main engine 8, a fuel tank 10, a piping system 20, a compartment 30, a duct 50, a circulation fan 60, an ammonia removal unit 48, an ammonia sensor S1, an air supply damper 31, an exhaust damper 32, and a suction duct 33.

### (Hull)

As shown in Fig. 1, the hull 2 of the present embodiment has sides 5A and 5B, a ship bottom 6, and an upper deck 7. The sides 5A and 5B have left and right sides 5A and 5B and a pair of side 5A and 5B skins respectively forming the sides 5A and 5B. The ship bottom 6 has a doublebottomed ship bottom 6 skin connecting the sides 5A and 5B. The upper deck 7 is provided over upper end portions of the pair of side 5A and 5B skins in an up-down direction Dv. A bow-stern direction FA in the present embodiment is a direction extending from a stern 3b to a bow 3a of the hull 2. That is, the bow-stern direction FA is a navigation direction (traveling direction) of the ship 1.

### (Superstructure)

The superstructure 4 is provided on the upper deck 7. An accommodation space and the like are provided in the superstructure 4. In the ship 1 of the present embodiment, for example, a cargo space (not shown) for loading cargo is provided closer to the bow 3a than the superstructure 4 in the bow-stern direction FA.

### (Fuel Tank)

The fuel tank 10 internally stores ammonia as a fuel for the main engine 8. The fuel tank 10 of the present embodiment is provided on the upper deck 7 closer to the stern 3b than the side superstructure 4 in the bow-stern direction FA.

### (Main Engine)

The main engine 8 propels the ship 1 using at least ammonia stored in the fuel tank 10 as the fuel. The main engine 8 of the present embodiment is an internal combustion engine using ammonia as the fuel, and is installed, for example, in an engine room (not shown) provided in a layer below the upper deck 7.

### (Piping System)

The piping system 20 connects the main engine 8 and the fuel tank 10 to each other. In the piping system 20, ammonia as the fuel can flow from at least the fuel tank 10 to the main engine 8.

### (Compartment)

The compartment 30 is provided on the upper deck 7 of the hull 2. The compartment 30 accommodates ammonia-related equipment. The compartment 30 of the present embodiment is interposed between the fuel tank 10 and the main engine 8 in the piping system 20. In the piping system 20 described above, ammonia as a fuel flows via the compartment 30. The compartment 30 illustrated in the present embodiment is an ammonia fuel supply apparatus room (including an ammonia fuel regulator valve room) of the ship 1, and is provided with ammonia fuel equipment (not shown) that handles ammonia, such as a pump that pumps ammonia from the fuel tank 10 to the main engine 8, and a heater for heating and vaporizing ammonia sent to the main engine 8, and an electric valve.

The ammonia-related equipment is not limited to the ammonia fuel equipment. Furthermore, the ammonia-related equipment may be any equipment that handles ammonia, and is not limited to the pump, the heater, and the electric valve. Furthermore, the compartment 30 may accommodate, as the ammonia-related equipment, ammonia cargo equipment that handles ammonia as a cargo.

### (Duct)

Fig. 2 is a view showing a configuration related to the removal of ammonia in the compartment 30.

As shown in Fig. 2, the duct 50 has a first opening 50a and a second opening 50b each communicating with the compartment 30. The duct 50 of the present embodiment forms a flow path connecting the first opening 50a to the second opening 50b. The duct 50 of the present embodiment is provided outside the compartment 30, and both ends of the duct 50 in which the first opening 50a and the second opening 50b are formed are connected to walls of the compartment 30. The duct 50 is formed so that, for example, the air in the compartment 30 that has flowed in from the first opening 50a can be returned to an inside of the duct 50 from the second opening 50b. The duct 50 of the present embodiment is configured so that the air does not flow out from portions other than the first opening 50a and the second opening 50b.

### (Circulation Fan)

The circulation fan 60 blows the air from the first opening 50a toward the second opening 50b. The circulation fan 60 of the present embodiment is provided inside the duct 50. By operating the circulation fan 60, the air in the compartment 30 flows into the duct 50 from the first opening 50a, flows through the flow path in the duct 50, and then returns to the inside of the compartment 30 from the second opening 50b. That is, the air in the compartment 30 can be circulated through the duct 50 by the circulation fan 60. In the present embodiment, a case where the circulation fan 60 is provided inside the duct 50 near the first opening 50a has been illustrated. However, the disposition of the circulation fan 60 is not limited to the above disposition as long as the air in the compartment 30 can be circulated through the duct 50.

### (Ammonia Removal Unit)

The ammonia removal unit 48 is a device that removes, in a case where the air in the compartment 30 contains the vaporized ammonia, the ammonia. The ammonia removal unit 48 is provided midway in the duct 50, and removes ammonia contained in the air flowing inside the compartment 30 blown by the circulation fan 60. The ammonia removal unit 48 in the present embodiment is provided, for example, downstream (second opening 50b side) of the circulation fan 60 in an air flow direction.

The ammonia removal unit 48 has a scrubber 40, a scrubber line 70, a scrubber pump 71, a moisture removal device 44, and discharge lines 45.

The scrubber 40 has a housing 41 and a nozzle 42. The housing 41 forms a space into which the air blown by the circulation fan 60 is introduced. The nozzle 42 is provided inside the housing 41 and sprays fresh water, which is supplied via the scrubber line 70, to the inside of the housing 41. The nozzle 42 in the present embodiment sprays fresh water from an upper portion to a lower portion of the housing 41. By spraying fresh water from the nozzle 42 in this manner, the sprayed fresh water comes into contact with ammonia in the air, and the ammonia is dissolved in the fresh water. The ammonia water moves to the lower portion of the housing 41 due to its own weight.

The scrubber line 70 forms a flow path for supplying water to the nozzle 42. One end of the scrubber line 70 is connected to the nozzle 42 of the scrubber 40. The other end of the scrubber line 70 is provided in, for example, the hull 2 and is connected to a fresh water tank (not shown) or the like in which fresh water is stored.

The scrubber pump 71 is provided on the scrubber line 70. The scrubber pump 71 pumps fresh water inside the scrubber line 70 toward the nozzle 42. That is, by operating the scrubber pump 71, fresh water is supplied from the fresh water tank to the nozzle 42 via the scrubber line 70, and the fresh water is sprayed from the nozzle 42.

The moisture removal device 44 is provided in the duct 50 downstream of the housing 41 in the air flow direction. The moisture removal device 44 is a device that removes moisture contained in the air flowing through the duct 50 after passing through the ammonia removal unit 48. More specifically, the moisture removal device 44 removes, in the fresh water sprayed inside the housing 41, water sent from the housing 41 to a second opening 50b side of the duct 50 by the air blown by the circulation fan 60. Although the case where the moisture removal device 44 in the present embodiment is provided adjacent to the ammonia removal unit 48 is illustrated as an example, any disposition can be applied as long as the moisture removal device 44 can remove moisture before the moisture reaches the second opening 50b. For example, the moisture removal device 44 and the ammonia removal unit 48 may be spaced apart. In a case where the air flowing through the duct 50 contains ammonia, the ammonia is dissolved in the water sent from the housing 41 to the second opening 50b side of the duct 50.

The discharge line 45 discharges the ammonia water that has moved to a lower portion of the ammonia removal unit 48 to the outside of an air circulation system by the duct 50. Furthermore, the discharge line 45 discharges the water removed by the moisture removal device 44 to the outside of the air circulation system by the duct 50. For example, the discharge line 45 can be connected to an ammonia-absorbing water tank (not shown) that stores the ammonia water outside the air circulation system. The discharge line 45 in the present embodiment is formed such that the ammonia water from the ammonia removal unit 48 and the water removed by the moisture removal device 44 join. However, the ammonia water from the ammonia removal unit 48 and the water removed by the moisture removal device 44 may be allowed to individually flow into the ammonia-absorbing water tank (not shown) without joining.

### (Ammonia Sensor)

The ammonia sensor S1 is a sensor that measures an ammonia concentration contained in the surrounding air. In the present embodiment, the ammonia sensor S1 is provided, for example, inside the compartment 30, and detects or measures the ammonia concentration of the air inside the compartment 30. A measurement result by the ammonia sensor S1 can be visually recognized, for example, through a display or the like provided outside the compartment 30.

### (Air Supply Damper)

The air supply damper 31 is a damper for supplying external air from the outside of the compartment 30 to the inside of the compartment 30. The air supply damper 31 of the present embodiment is provided on a wall member (including a ceiling wall member and a bottom wall member) of the compartment 30. The air supply damper 31 is opened, for example, when the compartment 30 is ventilated. In addition, open and closed states of the air supply damper 31 are controlled based on the measurement result of the ammonia concentration measured by the ammonia sensor S1.

The air supply damper 31 is brought into the open state in a state in which the ammonia concentration measured by the ammonia sensor S1 is lower than a predetermined reference value and in a case where the air pressure in the compartment 30 is lower than a predetermined reference value (for example, in a case of a negative pressure state lower than the atmospheric pressure) . In addition, the air supply damper 31 is opened in a state in which the ammonia concentration measured by the ammonia sensor S1 is lower than the predetermined reference value and in a case where ventilation in the compartment 30 is required.

### (Exhaust Damper)

The exhaust damper 32 is a damper for discharging the air from the inside of the compartment 30 to the outside of the compartment 30. The exhaust damper 32 of the present embodiment is provided on the wall member (including the ceiling wall member and the bottom wall member) of the compartment 30. The exhaust damper 32 is opened, for example, when the internal pressure of the compartment 30 is adjusted or when ventilation is performed. In addition, open and closed states of the exhaust damper 32 are controlled based on the measurement result of the ammonia concentration measured by the ammonia sensor S1.

The exhaust damper 32 is brought into the open state in a state in which the ammonia concentration measured by the ammonia sensor S1 is lower than the predetermined reference value, and the exhaust damper 32 is opened together with the air supply damper 31 in the state in which the ammonia concentration measured by the ammonia sensor S1 is lower than the predetermined reference value and in a case where ventilation in the compartment 30 is required.

### (Suction Duct)

The suction duct 33 has a tubular shape extending into the compartment 30 from the first opening 50a of the duct 50. The suction duct 33 is open to the inside the compartment 30. In the present embodiment, a base portion of the suction duct 33 is connected to the first opening 50a, and an end portion thereof is open to the inside of the compartment 30. Furthermore, the suction duct 33 in the present embodiment is, for example, branched in two directions while extending into the compartment 30.

The suction duct 33 in the present embodiment is at least open at a place inside the compartment 30 where an air flow is likely to stay. Here, the place where the air flow is likely to stay is a place where movement of the air is unlikely to occur when the circulation fan 60 is operated to circulate the air without providing the suction duct 33. Examples of the place where the air flow is likely to stay include the vicinity of a corner of the compartment 30 and the vicinity of a location in the compartment 30 where equipment and the like are complicated. By providing such a suction duct 33, when the circulation fan 60 is operated, the air in the vicinity of an opening of the suction duct 33 is suctioned, and the suctioned air is guided to the inside of the duct 50.

### (Actions and Effects)

The ship 1 according to the first embodiment includes the compartment 30 in which the ammonia fuel equipment is accommodated, the duct 50 having the first opening 50a and the second opening 50b each communicating with the compartment 30, the circulation fan 60 that blows the air from the first opening 50a toward the second opening 50b of the duct 50, and the ammonia removal unit 48 that is provided midway in the duct 50 and is capable of removing ammonia contained in the air inside the compartment 30 that is blown by the circulation fan 60.

According to such a configuration, the air inside the compartment 30 flows into the duct 50 from the first opening 50a of the duct 50 and is blown from the first opening 50a toward the second opening 50b by the circulation fan 60. Then, ammonia is removed from the air blown into the duct 50 by the ammonia removal unit 48 provided midway in the duct 50. Thereafter, the air after the ammonia has been removed flows into the compartment 30 through the second opening 50b. Then, by repeating the above series of actions, air circulation occurs between the compartment 30 and the duct 50.

Since the air circulates in the compartment 30 and in the duct 50, the ammonia-containing air inside the compartment 30 is repeatedly introduced into the ammonia removal unit 48. Accordingly, the ammonia contained in the air inside the compartment 30 can be repeatedly removed.

In addition, since the ammonia removal unit 48 is provided in the duct 50, it is not necessary to sprinkle water into the compartment 30 in order to remove the ammonia in the compartment 30.

Therefore, contact between a worker and ammonia inside and outside the compartment 30 can be suppressed without flooding the equipment in the compartment 30.

In addition, the duct of the first embodiment is provided outside the compartment 30.

According to such a configuration, it is possible to take a large space in the compartment 30 in which the equipment is installed.

In addition, the ammonia removal unit 48 of the first embodiment has the scrubber 40 that sprays water onto the ammonia-containing air flowing through the duct 50, and the discharge line 45 for discharging the water in which the ammonia is dissolved.

According to such a configuration, since the property of ammonia being highly soluble in water is used, it is possible to effectively remove the ammonia from the ammonia-containing air.

In addition, the ship 1 according to the first embodiment further includes the suction duct 33 that is connected to the first opening 50a, extends from the first opening 50a into the compartment 30, and is open to the inside of the compartment 30.

Accordingly, the air in the vicinity of the opening can be introduced into the duct 50 via the suction duct 33. Therefore, for example, in a case where the opening of the suction duct 33 is disposed at a place where the air is likely to stay, the ammonia leaked in the compartment 30 can be effectively removed without staying in the compartment 30.

In addition, the ship 1 according to the first embodiment includes the ammonia sensor S1 that detects and measures an ammonia concentration in the air inside the compartment 30, the air supply damper 31 that supplies external air from the outside to the inside of the compartment 30, the exhaust damper 32 that discharges the air from the inside to the outside of the compartment 30. Accordingly, both the air supply damper 31 and the exhaust damper 32 can be brought into the closed state by detecting ammonia in the compartment 30. Therefore, ammonia does not leak from the inside to the outside of the compartment 30.

### [Second Embodiment]

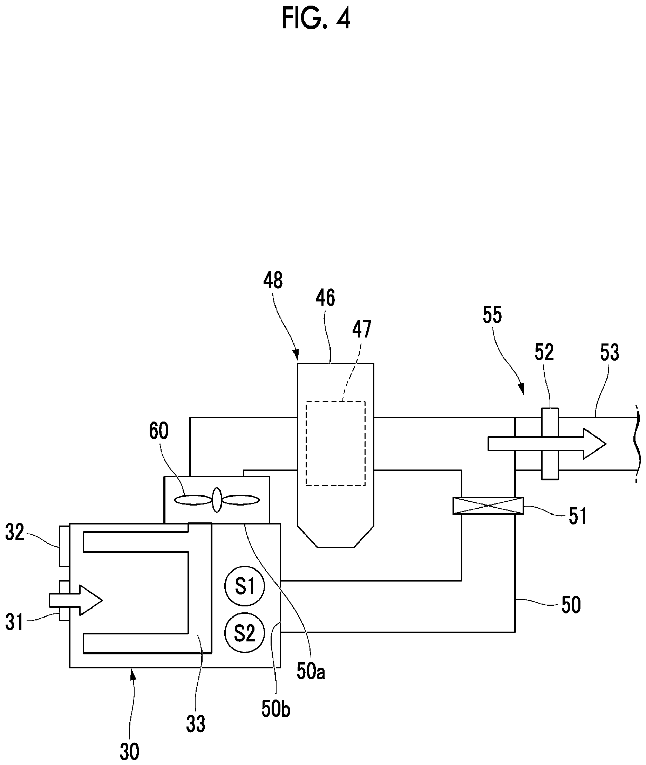

Hereinafter, a configuration of a ship of a second embodiment of the present disclosure will be described with reference to Figs. 3 and 4. In the second embodiment, configurations of the duct 50 and the ammonia removal unit 48 included in the ship 1 are different. In addition, the ship 1 of the second embodiment further includes an atmosphere opening unit 55 and an oxygen sensor S2. The same components as those in the first embodiment are denoted by the same reference signs, and detailed descriptions thereof will not be repeated. Fig. 3 is a view showing a configuration related to the removal of ammonia in the compartment 30.

### (Duct)

The duct 50 in the second embodiment has a duct damper 51 between the first opening 50a and the second opening 50b. As shown in Fig. 3, the duct damper 51 is normally in an open state. When the duct damper 51 is in the open state, the circulation fan 60 is driven as in the first embodiment, so that the air in the compartment 30 flows into the duct 50 from the first opening 50a, is blown toward the second opening 50b in the duct 50, and then returns to the inside of the compartment 30 from the second opening 50b.

### (Ammonia Removal Unit)

The ammonia removal unit 48 removes the ammonia leaked in the compartment 30, similarly to the ammonia removal unit 48 of the first embodiment. That is, the ammonia removal unit 48 is provided midway in the duct 50 and removes ammonia contained in the air inside the compartment 30 blown by the circulation fan 60. The ammonia removal unit 48 of the second embodiment is provided, for example, downstream of the circulation fan 60 in the air flow direction and upstream (the first opening 50a side) of the duct damper 51 in the air flow direction.

The ammonia removal unit 48 of the second embodiment includes a removal unit body 46 and a catalyst 47.

The removal unit body 46 is provided so as to communicate with the duct 50 midway in the duct 50. The removal unit body 46 forms a space into which the ammonia-containing air in the compartment 30 blown by the circulation fan 60 is introduced.

The catalyst 47 is provided at a position inside the removal unit body 46 where the catalyst 47 comes into contact with the introduced ammonia-containing air. In the present embodiment, the catalyst 47 is an ammonia decomposition catalyst that decomposes ammonia (NH3) into nitrogen gas (N2), hydrogen gas (H2), or the like by coming into contact with ammonia.

### (Atmosphere Opening Unit)

The atmosphere opening unit 55 is a ventilation mechanism that discharges the air in the compartment 30 and in the duct 50 to the atmosphere midway in the duct 50 when ventilation of the air in the compartment 30 is required. The atmosphere opening unit 55 has an atmosphere opening duct 53 and an atmosphere opening damper 52.

The atmosphere opening duct 53 is formed to branch from a midway point of the duct 50. More specifically, one end of the atmosphere opening duct 53 branches off from the duct 50 between the ammonia removal unit 48 and the duct damper 51. In other words, the atmosphere opening duct 53 is connected to the duct 50 downstream of the ammonia removal unit 48 in the air flow direction inside the duct 50 and upstream of the duct damper 51 in the air flow direction. The other end of the atmosphere opening duct 53 is open to the atmosphere outside the ship.

The atmosphere opening damper 52 is provided midway in the atmosphere opening duct 53. The atmosphere opening damper 52 is normally in a closed state, so that the air in the duct 50 is not discharged into the atmosphere.

The atmosphere opening damper 52 is brought into an open state together with the air supply damper 31 in a state in which the ammonia concentration measured by the ammonia sensor S1 is lower than a predetermined reference value and in a case where ventilation of the air in the compartment 30 is required.

In addition, the atmosphere opening damper 52 is also brought into the open stage together with the air supply damper 31 in the state in which the ammonia concentration measured by the ammonia sensor S1 is lower than the predetermined reference value and in a case of an oxygendeficient state in which an oxygen concentration measured by the oxygen sensor S2, which will be described later, in the compartment 30 is lower than a predetermined reference value.

When the atmosphere opening damper 52 and the air supply damper 31 are brought into the open state, the duct damper 51 is brought into a closed state. The duct damper 51 in the closed state makes it impossible for the air in the duct 50 to return to the inside of the compartment 30.

As shown in Fig. 4, when the air supply damper 31 and the atmosphere opening damper 52 are in the open state, the duct damper 51 is in the closed state, and the circulation fan 60 is in a drive state, the air in the compartment 30 passes through the duct 50 and then flows into the atmosphere opening duct 53. That is, the air that has flowed into the atmosphere opening duct 53 is forcibly discharged to the atmosphere. With the outflow of the air to the atmosphere, the external air flows into the compartment 30 through the air supply damper 31. Therefore, by bringing the atmosphere opening damper 52 and the air supply damper 31 into the open state and the duct damper 51 into the closed state by driving the circulation fan 60, the air inside the compartment 30 can be forcibly replaced with the air outside the compartment 30.

### (Oxygen Sensor)

The oxygen sensor S2 is a sensor that measures the oxygen concentration contained in the surrounding air. In the present embodiment, the oxygen sensor S2 is provided, for example, inside the compartment 30 in order to prevent the inside of the compartment 30 from becoming deficient in oxygen, and detects or measures the oxygen concentration of the air inside the compartment 30.

### (Actions and Effects)

The ammonia removal unit 48 of the ship 1 according to the second embodiment has the catalyst 47 that decomposes ammonia. Accordingly, the catalyst 47 decomposes the ammonia contained in the air inside the duct 50, so that the ammonia is removed from the air without using moisture. Therefore, since moisture is not used for removing the ammonia leaked into the compartment 30, the equipment in the compartment 30 is not flooded. Therefore, no failure or electric leakage occurs due to flooding of the equipment. In addition, design restrictions regarding a waterproof standard (IP code) of the equipment in the compartment 30 can be relieved.

In addition, in the above configuration, the ship 1 includes the ammonia sensor S1 that measures the ammonia concentration of the air inside the compartment 30, the air supply damper 31 that supplies air outside the compartment 30 into the compartment 30, and the atmosphere opening damper 52 that discharges the air in the duct 50 to the atmosphere.

Accordingly, in a case where the ammonia concentration of the air inside the compartment 30 is lower than the predetermined reference value, the air supply damper 31 and the atmosphere opening damper 52 can be brought into the open state. Therefore, the air inside the compartment 30 can be discharged to the atmosphere, and the air inside the compartment 30 can be replaced with the air outside the compartment 30. Accordingly, contact between a worker and ammonia can be suppressed when the worker enters the compartment 30, so that the worker can work safely.

Furthermore, in the second embodiment, in a configuration including the ammonia removal unit 48 using the catalyst 47, the duct damper 51 and the atmosphere opening unit 55 are provided.

Accordingly, even in a case where nitrogen gas, hydrogen gas, or the like is generated due to the contact between the ammonia and the catalyst 47 and the oxygen concentration in the compartment 30 is lowered, the oxygen concentration in the compartment can be recovered by driving the circulation fan 60 after the ammonia concentration is sufficiently lowered. Therefore, the worker can enter the compartment 30 and perform the work more quickly.

### [Other Embodiments]

While the embodiments of the present disclosure have been described above in detail with reference to the drawings, specific configurations are not limited to the configurations of each embodiment, and additions, omission, and substitutions of the configurations and other changes can be made without departing from the concept of the present disclosure. In addition, the present disclosure is not limited to the embodiments.

In the first embodiment, the nozzle 42 is configured to spray fresh water inside the housing 41 of the scrubber 40. However, the present disclosure is not limited to the fresh water, and seawater may be sprayed. In a case where the nozzle 42 is configured to spray seawater, the scrubber line 70 may be connected to a seawater tank (not shown) in which seawater is stored, which is provided in the hull 2, instead of the fresh water tank, or may open directly into the sea. The moisture removal device 44 may be configured to be capable of removing not only the moisture contained in the air flowing through the duct 50 but also salt. Accordingly, it is possible to use readily available seawater instead of the fresh water, which is limited in the amount that can be used while the ship 1 is in operation.

In addition, the first embodiment illustrates that the ammonia water inside the housing 41 can be discharged to the ammonia-absorbing water tank, but is not limited to this configuration. The discharge line 45 may be configured to be open to the outside of the ship and to directly discharge the ammonia water to the sea.

In addition, the embodiments illustrate that the ammonia sensor S1 is provided inside the compartment 30 to measure the ammonia concentration of the air inside the compartment 30, but is not limited to this configuration. The ammonia sensor S1 may be provided, for example, inside the duct 50 to measure the ammonia concentration of the air flowing through the duct 50. Alternatively, the ammonia sensor S1 may be provided, for example, midway in the discharge line 45 to measure the ammonia concentration of the air inside the discharge line 45 and the discharged ammonia water. Therefore, the ammonia sensor S1 may be provided in at least one of the inside of the compartment 30, the inside of the duct 50, and the inside of the discharge line 45.

Furthermore, in each of the embodiments, the case where the suction duct 33 is provided in the compartment 30 has been described. However, the suction duct 33 may be provided only in a case where there is a place in the compartment 30 where the air flow is likely to stay. That is, the suction duct 33 may be omitted in a case where there is no place in the compartment 30 where the air flow is likely to stay.

In addition, the ship 1 illustrated in the embodiments is not limited to an independent configuration, and the ship 1 may be configured by appropriately combining the components described in each of the embodiments.

In addition, in the embodiments, a ship type of the ship 1 is a liquefied gas carrier, but the ship type is not limited to the liquefied gas carrier. The ship type may be a container ship, a tanker, a bulk carrier, a car carrier, an RO-RO cargo ship, a ferry, a passenger ship, a fishing vessel, a special ship, a warship, or the like.

In addition, in the embodiments, the compartment 30 is provided on the upper deck 7 of the hull 2, but is not limited to the configuration provided on the upper deck 7. The compartment 30 may be provided inside the hull 2.

In addition, in the embodiments, the compartment 30 is interposed between the fuel tank 10 and the main engine 8 in the piping system 20. However, the compartment 30 may not be interposed between the fuel tank 10 and the main engine 8 as long as the compartment 30 accommodates the ammonia-related equipment.

### [Supplementary Notes]

The ship described in the embodiments is understood as follows, for example.

(1) A ship 1 according to a first aspect includes: a compartment 30 in which ammonia-related equipment is accommodated; a duct 50 having a first opening 50a and a second opening 50b each communicating with the compartment 30; a circulation fan 60 that blows air from the first opening 50a of the duct 50 toward the second opening 50b; and an ammonia removal unit 48 that is provided midway in the duct 50 and is capable of removing ammonia contained in the air inside the compartment 30 that is blown by the circulation fan 60.

With the above configuration, the air inside the compartment 30 flows into the duct 50 and is blown from the first opening 50a toward the second opening 50b by the circulation fan 60. The air blown in the duct 50 is subjected to removal of ammonia contained in the air by the ammonia removal unit 48 provided midway in the duct 50, and returns to the inside of the compartment 30 through the second opening 50b. Then, by repeating the above series of actions, air circulation occurs between the compartment 30 and the duct 50.

Accordingly, since the air circulates in the compartment 30 and in the duct 50 in the above configuration, the air containing ammonia is repeatedly introduced into the ammonia removal unit 48. Therefore, the ammonia in the air in the compartment 30 is gradually removed. In addition, since the ammonia removal unit 48 is provided in the duct 50, it is not necessary to sprinkle water into the compartment 30 in order to remove the ammonia in the compartment 30. Therefore, even in a case where ammonia leaks from the ammonia fuel equipment due to an accidental event, contact between a worker and ammonia inside and outside the compartment 30 can be suppressed without flooding the equipment in the compartment 30.

(2) The ship 1 according to a second aspect is the ship 1 of (1), and the duct 50 may be provided outside the compartment 30.

Accordingly, it is possible to take a large space in the compartment 30 in which the equipment is installed.

(3) The ship 1 according to a third aspect is the ship 1 according to (1) or (2), and the ammonia removal unit 48 may include a scrubber 40 that sprays water onto the ammonia, and a discharge line 45 that discharges the water in which the ammonia is dissolved.

Accordingly, since a property of ammonia being highly soluble in water is used, it is possible to effectively remove the ammonia from the ammonia-containing air.

(4) The ship 1 according to a fourth aspect is the ship 1 of (1) or (2), and the ammonia removal unit 48 may have a catalyst 47 that decomposes the ammonia.

Accordingly, the catalyst 47 decomposes the ammonia contained in the air inside the duct 50, so that the ammonia is removed from the air without using moisture. Therefore, since moisture is not used for removing the ammonia leaked into the compartment 30, the equipment in the compartment 30 is not flooded.

(5) The ship 1 according to a fifth aspect is the ship 1 of (4), and may further include: an ammonia sensor S1 that measures an ammonia concentration of the air in at least one of an inside of the compartment 30 and an inside of the duct 50; an air supply damper 31 that supplies air outside the compartment to the inside of the compartment 30; and an atmosphere opening unit 55 that is provided in the duct 50 downstream of the ammonia removal unit 48 in an air flow direction and discharges the air to an atmosphere.

Accordingly, in a case where the ammonia concentration of the air inside the compartment 30 is lower than the predetermined reference value, the air supply damper 31 and the atmosphere opening damper 52 can be brought into the open state. Therefore, the air inside the compartment 30 can be replaced with the air outside the compartment 30.

(6) The ship 1 according to a sixth aspect is the ship 1 according to any one of (1) to (5), and may further include: a suction duct 33 that is connected to the first opening 50a, extends from the first opening 50a into the compartment 30, and is open to an inside of the compartment 30.

Accordingly, the air in the vicinity of the opening can be introduced into the duct 50 via the suction duct 33. Therefore, for example, in a case where the opening of the suction duct 33 is disposed at a place where the air is likely to stay, the ammonia leaked in the compartment 30 can be effectively removed without staying in the compartment 30.

### Industrial Applicability

According to the ship of the present disclosure, contact between a worker and ammonia inside and outside a compartment can be suppressed without flooding equipment in the compartment.

### Reference Signs List

- 1:: ship
- 2:: hull
- 3a:: bow
- 3b:: stern
- 4:: superstructure
- 5A, 5B:: side
- 6:: ship bottom
- 7:: upper deck
- 8:: main engine
- 10:: fuel tank
- 11:: cargo tank
- 14:: engine room
- 20:: piping system
- 30:: compartment
- 31:: air supply damper
- 32:: exhaust damper
- 33:: suction duct
- 40:: scrubber
- 41:: housing
- 42:: nozzle
- 44:: moisture removal device
- 45:: discharge line
- 46:: removal unit body
- 47:: catalyst
- 48:: ammonia removal unit
- 50:: duct
- 50a:: first opening
- 50b:: second opening
- 51:: duct damper
- 52:: atmosphere opening damper
- 53:: atmosphere opening duct
- 55:: atmosphere opening unit
- 60:: circulation fan
- 70:: scrubber line
- 71:: scrubber pump
- Dv:: up-down direction
- FA:: bow-stern direction
- S1:: ammonia sensor
- S2:: oxygen sensor

## Claims

1. A ship comprising:
a compartment in which ammonia-related equipment is accommodated;
a duct having a first opening and a second opening each communicating with the compartment;
a circulation fan that blows air from the first opening of the duct toward the second opening; and
an ammonia removal unit that is provided midway in the duct and is capable of removing ammonia contained in the air inside the compartment that is blown by the circulation fan.

2. The ship according to claim 1,
wherein the duct is provided outside the compartment.

3. The ship according to claim 1 or 2,
wherein the ammonia removal unit includes
a scrubber that sprays water onto the ammonia, and
a discharge line that discharges the water in which the ammonia is dissolved.

4. The ship according to claim 1 or 2,
wherein the ammonia removal unit has a catalyst that decomposes the ammonia.

5. The ship according to claim 4, further comprising:
an ammonia sensor that measures an ammonia concentration of the air in at least one of an inside of the compartment and an inside of the duct;
an air supply damper that supplies air outside the compartment to the inside of the compartment; and
an atmosphere opening unit that is provided in the duct downstream of the ammonia removal unit in an air flow direction and discharges the air to an atmosphere.

6. The ship according to any one of claims 1 to 5, further comprising:
a suction duct that is connected to the first opening, extends from the first opening into the compartment, and is open to an inside of the compartment.
